# EUROPEAN PATENT APPLICATION

(11) **EP 0 697 801 A2**
(43) Date of publication of application: **21.02.1996**
(21) Application number: 95110830.7
(22) Date of filing: 11.07.1995
(51) Int. Cl.: H04Q 11/04

(54) **Fibre channel on ATM**

(30) Priority: 15.08.1994 US 290651
(71) Applicant: Hewlett-Packard Company, Palo Alto, California 94304 (US)
(72) Inventor: Stoevhase, Bent, Toronto, ONT M5B 2115 (CA); Mallavalli, Kumar, Markham, ONT L3S 3C2 (CA)
(74) Representative: Schoppe, Fritz, Dipl.-Ing.

(57) **Abstract**

A system for facilitating communications between a Fibre Channel network (100) and an ATM-based network (101) is presented. The Fibre Channel network (100) operates under a first protocol; the ATM-based network (101) operates under a second protocol. A translator (201) is provided to render frames of data from the first protocol to second protocol. Essentially a system is provided for facilitating data communications between a fibre channel network (100) and an ATM-based network (101), the fibre channel having an associated first protocol, the ATM-based network having an associated second protocol. The system comprises: a fibre channel fabric (110) which handles routing of data within the fibre channel network (100) based upon the first protocol; an ATM fabric (111) which handles routing of data whithin the ATM-based network (101) based upon the second protocol; and a translator (201) disposed between the fibre channel fabric (110) and the ATM fabric (111), the translator (201) sends a frame of data from the fibre channel fabric (110) through the ATM fabric (111), the frame being indicative of the first protocol, the translator modifies the frame to be indicative of the second protocol.

## Description

### FIELD OF THE INVENTION

The present invention relates generally to high speed data communications networks and more particularly to a system for sending fibre channel frames of data through an ATM network.

### BACKGROUND AND SUMMARY OF THE INVENTION

Mainframes, super computers, mass storage systems, workstations and very high resolution display subsystems are frequently connected together to facilitate file and print sharing. Common networks and channels used for these types of connections oftentimes introduce communications bottlenecking, especially in cases where the data is in a large file format typical of graphically-based applications.

There are two basic types of data communications connections between processors, and between a processor and peripherals. A "channel" provides a direct or switched point-to-point connection between communicating devices. The channel's primary task is merely to transport data at the highest possible data rate with the least amount of delay. Channels typically perform simple error correction in hardware. A "network," by contrast, is an aggregation of distributed nodes (e.g., workstations, mass storage units) with its own protocol that supports interaction among these nodes. Typically, each node contends for the transmission medium, and each node must be capable of recognizing error conditions on the network and must provide the error management required to recover from the error conditions.

One type of communications interconnect that has been developed is Fibre Channel. See *Fibre Channel: Connection to the Future*, a booklet published by the Fibre Channel Association, for a detailed discussion of the Fibre Channel standard and its applications. Briefly, Fibre Channel is a switched protocol that allows concurrent communication among workstations, super computers and various peripherals. The total network bandwidth provided by Fibre Channel is on the order of a terabit per second. Fibre Channel is capable of transmitting data frames at rates exceeding 1 gigabit per second in both directions simultaneously. It is also able to transport existing protocols such as internet protocol (IP), small computer system interface (SCSI), high performance parallel interface (HIPPI) and intelligent peripheral interface (IPI) over both optical fiber and copper cable.

Essentially, the Fibre Channel is a channel-network hybrid, containing enough network features to provide the needed connectivity, distance and protocol multiplexing, and enough channel features to retain simplicity, repeatable performance and reliable delivery. Fibre Channel allows for an active, intelligent interconnection scheme, known as a "fabric," to connect devices. A fabric is an entity that interconnects various node-ports (N_ports) attached to the fabric. The fabric has the capability of routing data frames based upon information contained within the frames as specified by a class of service. The N_port simply manages the simple point-to-point connection between itself and the fabric. That transmission is isolated from the control protocol so that different topologies (e.g., point-to-point links, rings, multidrop buses, crosspoint switches) can be implemented. The fabric is self-managed so that N_ports do not need station management functionality, greatly simplifying system implementation.

Another scheme provided for communications interconnect is known as asynchronous transfer mode (ATM). ATM is essentially the transfer mode for implementing a broadband integrated services digital network (B-ISDN). An ISDN is a network that provides end-to-end digital connectivity to support a wide range of services, including voice and non-voice services, to which users have access to a limited set of standard multi-purpose user-network interfaces. A primary rate access provides a gross bit rate of 1.5-2 megabits per second. A B-ISDN supports rates that are higher than the primary rate, up to approximately 100 Mbits/sec. Examples of applications in which B-ISDN can be found are video conferencing, local area network interconnections and electronic mailing of mixed documents (i.e., a document that may have text, graphics, moving pictures and voice annotation).

ATM packs information that is to be transferred into fixed-size slots called cells. These cells have a 48 octet information field and a 5 octet header. The information field is available to the user; it holds the data to be transferred. The header field carries information that pertains to the ATM layer functionality itself. ATM allows the definition and recognition of individual communications by virtue of the label field located within each ATM cell header; the header field contains the routing information. For a more detailed discussion of ATM and its application, see *Integrated Broadband Networks: An Introduction to ATM-Based Networks* published by Addison-Wesley Publishing Company.

Presently, there is no mechanism that would allow a network connected via Fibre Channel to communicate with an ATM-based network. The present invention provides a translator for sending fibre channel frames of data through an ATM network. The present translator provides transparent operation of all Fibre Channel service classes and topologies across a fabric which contains inter-element links through an ATM fabric.

The present invention is essentially a system for facilitating data communications between a fibre channel network and all ATM-based network, the fibre channel having an associated first protocol, the ATM-based network having an associated second protocol. The system comprises: a fibre channel fabric which handles routing of data within the fibre channel network based upon the first protocol; an ATM fabric which handles routing of data within the ATM-based network based upon the second protocol; and a translator disposed between the fibre channel fabric and the ATM fabric, the translator sends a frame of data from the fibre channel fabric through the ATM fabric, the frame being indicative of the first protocol, the translator modifies the frame to be indicative of the second protocol.

### BRIEF DESCRIPTION OF THE DRAWINGS

FIG. 1a shows a block diagram of a representative Fibre Channel architecture.

FIG. 1b shows a block diagram of a representative ATM-based network.

FIG. 2 shows a block diagram of the translator according to the present invention.

FIG. 3 shows the frame protocol of the Fibre Channel.

FIG. 4 shows a block diagram of the ordered sets as defined within the translator.

### DETAILED DESCRIPTION OF THE PREFERRED EMBODIMENT

Briefly, the present invention provides a translator for sending fibre channel frames of data through an ATM-based network. The present translator provides transparent operation of all Fibre Channel service classes and topologies across a fabric which contains inter-element links through an ATM fabric. The translator must deliver data frames from the Fibre Channel fabric through the ATM fabric within the predetermined time-out value (TOV). Additionally, guaranteed notification of nondelivery for the appropriate classes of service must be provided.

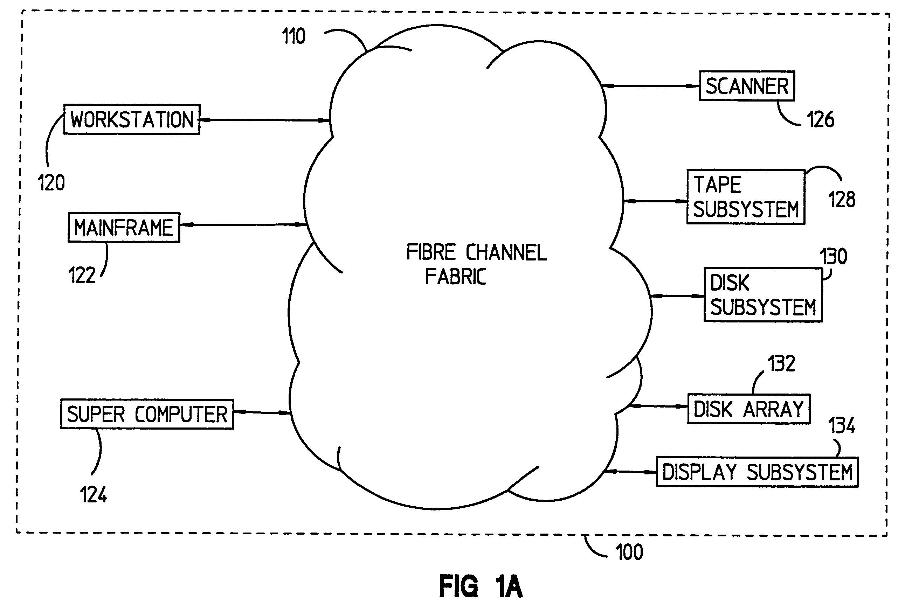

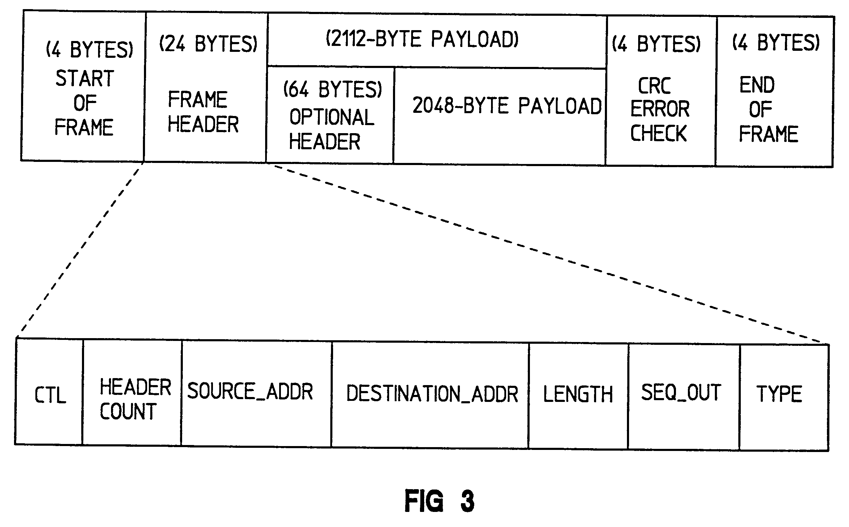

As used herein, these terms and phrases are defined as follows:
- AAL5--: ATM adaptation layer, type 5;
- ATM--: asynchronous transmission (transfer) mode, a type of packet switching that transmits fixed-length units of data;
- Fabric--: a Fibre Channel-defined interconnection methodology that handles routing in Fibre Channel networks;
- Frame--: a linear set of transmitted bits that define a basic transport element;
- Link--: a communications channel;
- N_port--: "node" port, a Fibre Channel-defined hardware entity at the node end of a link;
- Ordered set--: a Fibre Channel term referring to four 10-bit characters that provide low-level link functions, such as frame demarcation and signaling between two ends of a link, it provides for initialization of the link after power-on and for some basic recovery actions;
- PDU--: protocol data unit;
- Primitive sequences--: a group of primitive signals;
- Primitive signal--: the basic transport element within an ATM fabric
Refer now to FIG. 1a which shows a block diagram of a representative Fibre Channel architecture. A Fibre Channel network 100 is presented. A workstation 120, a mainframe 122 and a super computer 124 are interconnected with various subsystems (e.g., a scanner 126, a tape subsystem 128, a disk subsystem 130, a disk array 132 and a display subsystem 134) via a Fibre Channel fabric 110. The fabric 100 is an entity that interconnects various node-ports (N_ports) attached to the fabric 100. The fabric 100 uses a first protocol. The N_ports are nothing more than the aforementioned workstation 120 et al. The fabric 100 has the capability of routing data frames (see FIG. 3 below) based upon information contained within the frames as specified by a class of service. The N_port simply manages the simple point-to-point connection between itself and the fabric 100. That transmission is isolated from the control protocol so that different topologies (e.g., point-to-point links, rings, multidrop buses, crosspoint switches) can be implemented. The fabric 100 is self-managed so that N_ports do not need station management functionality, greatly simplifying system implementation.

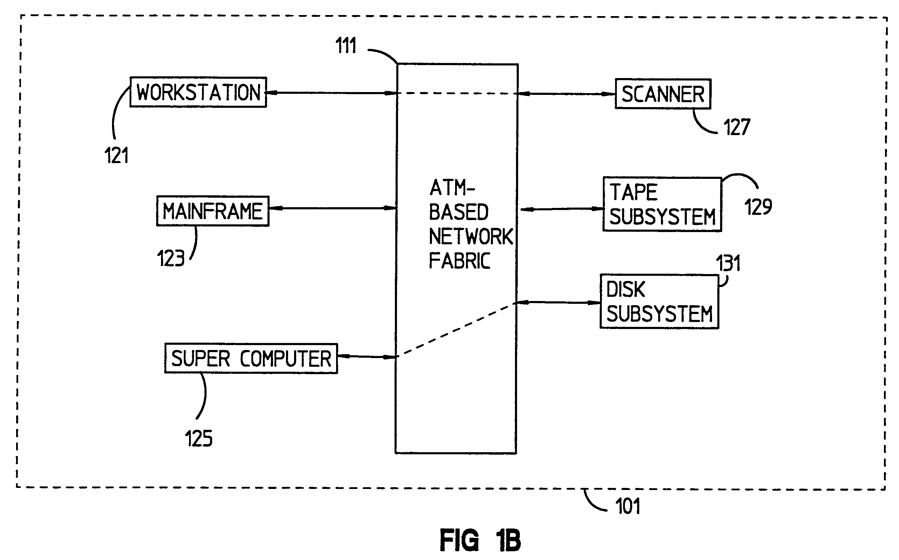

FIG. 1b shows a block diagram of a representative ATM-based network 101. An ATM-based network fabric-like entity 111 connects various hardware entities using a second protocol. ATM is essentially the transfer mode for implementing a broadband integrated services digital network (B-ISDN). The ATM-based network fabric 111 packs information that is to be transferred between various hardware entities (e.g., workstation 121 and scanner 127) into fixed-size slots called cells. These cells have a 48 octet information field and a 5 octet header. The information field is available to the user; it holds the data to be transferred. The header field carries information that pertains to the ATM layer functionality itself. ATM allows the definition and recognition of individual communications by virtue of the label field located within each ATM cell header; the header field contains the routing information.

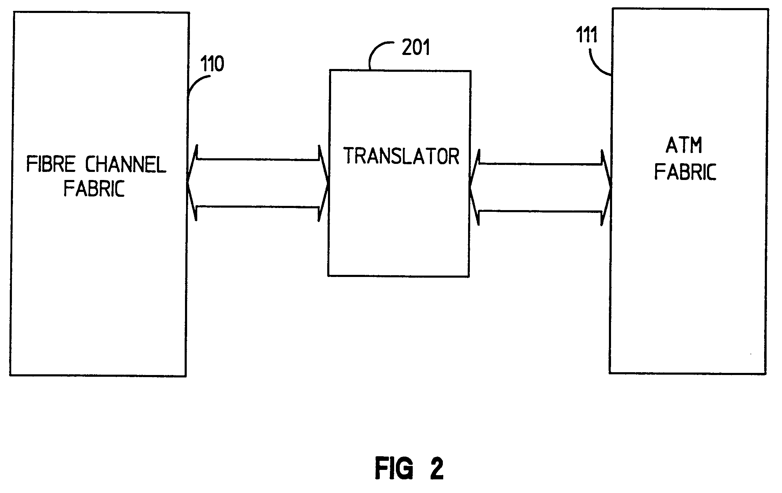

FIG. 2 shows a block diagram of the translator according to the present invention. The translator 201 is disposed between a Fibre Channel fabric 110 and an ATM fabric 111. The translator 201 may be implemented in a field programmable gate array (FPGA) chip or some other application-specific integrate circuit. The basic function of the translator 201 is to provide a means for sending Fibre Channel frames of data through all ATM-based network.

FIG. 3 shows the frame protocol of the Fibre Channel. In a preferred embodiment, the protocol is 2,148 bytes wide. A frame is the smallest indivisible packet of data that is sent through a Fibre Channel network. Addressing of the frame is done within the frame header which is 24 bytes long. Frames are not visible to the upper-level protocols and consist of the following fields:
a start-of-frame delimiter (4 bytes);
a frame header (24 bytes);
optional headers (64 bytes);
a variable-length payload containing user data (from 0 to 2048 bytes);
a cyclic redundancy check error check (4 bytes); and
an end-of-frame delimiter (4 bytes).
The frame header can be further defined as shown. The addressing of the frame is accomplished using a source address (SOURCE_ADDR) and destination address (DESTINATION_ADDR). The length of the user data that is encapsulated within the frame is defined within the header under the LENGTH field.

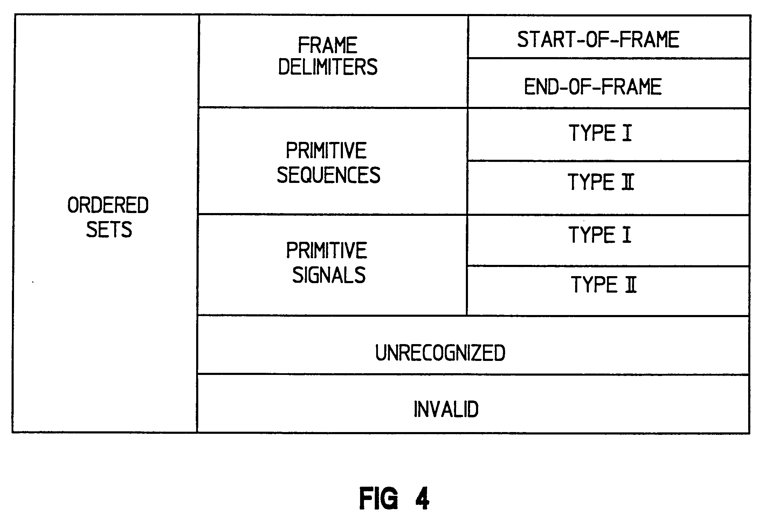

FIG. 4 shows a block diagram of the ordered sets as defined within the translator. The term "ordered set" refers to four 10-bit characters (a combination of data and special characters) that provide low-level link functions, such as frame demarcation and signaling between two ends of a link. The ordered sets provide for initialization of the link after power-on and for some basic recovery actions. Type I primitive signals are ordered sets which may cause an action by a recipient, on the initial reception of the ordered set, but subsequently. Reception of a different Type I primitive signal resets the recipient's inability to act on subsequent receptions of the original Type I primitive signal. A Type II primitive signal is an ordered set which may cause a recipient to take action on every received instance of the ordered set. All Type I primitive signals are used as fill words within the ATM fabric. Fill words are words that are transmitted when no other information is available. It permits the translator to sync up the Fibre Channel fabric and the ATM fabric.

The translator allows most Fibre Channel protocols to be run across an ATM fabric.. This is accomplished by sending frame transfers via the AAL5 CPCS-PDU producer. This translation is totally transparent to the N_ports. The first byte of the AAL5 CPCS-PDU identifies whether the ATM fabric is transferring a primitive sequence, a primitive signal, and unrecognized ordered set or a Fibre Channel frame.

## Claims

1. A system for facilitating data communications between a fibre channel network (100) and an ATM-based network (101), the fibre channel having an associated first protocol, the ATM-based network having an associated second protocol, the system comprising:
a fibre channel fabric (110) which handles routing of data within the fibre channel network (100)based upon the first protocol;
an ATM fabric (111) which handles routing of data within the ATM-based network (101) based upon the second protocol;
a translator (201) disposed between the fibre channel fabric (110) and the ATM fabric (111), the translator (201) sends a frame of data from the fibre channel fabric (110) through the ATM fabric (111), the frame being indicative of the first protocol, the translator modifies the frame to be indicative of the second protocol.
